# EUROPEAN PATENT SPECIFICATION

(11) **EP 2 830 140 B1**
(45) Date of publication and mention of the grant of the patent: **29.09.2021**
(21) Application number: 14166052.2
(22) Date of filing: 25.04.2014
(51) Int. Cl.: H01M 10/04, H01M 10/0587, H01M 10/052, H01M 4/04, H01M 50/531, H01M 50/579

(54) **Electrode assembly for a secondary battery**
Elektrodenanordnung für eine Sekundärbatterie
Ensemble formant électrode pour batterie secondaire

(30) Priority: 26.07.2013 US 201361858826 P; 03.04.2014 US 201414244416
(43) Date of publication of application: 28.01.2015
(73) Proprietor: Samsung SDI Co., Ltd., Yongin-si, Gyeonggi-do (KR)
(72) Inventor: Lee, Hyung-Dong, Gyeonggi-do (KR)
(74) Representative: Walaski, Jan Filip

(56) References cited:
- WO-A1-2012/127623
- JP-A- 2012 203 993
- KR-A- 20080 022 914
- US-A1- 2003 099 879
- US-A1- 2005 260 491

## Description

The described technology relates generally to an electrode assembly for a rechargeable battery, and more particularly, to an electrode assembly for a rechargeable battery in which safety in relation to a compressive force applied to the sides of the battery is improved.

Rechargeable batteries are batteries that can be repeatedly charged and discharged, unlike primary batteries that are incapable of being recharged. Low-capacity rechargeable batteries are used for small portable electronic devices such as mobile phones, laptop computers, and camcorders and large-capacity rechargeable batteries are widely used as power supplies for driving motors for hybrid vehicles or the like.

Recently, large-capacity and high-power rechargeable batteries using a non-aqueous electrolyte with high energy density have been developed. The high-power rechargeable batteries comprise high-power/large-capacity battery modules coupled to each other in series or in parallel.

Generally, rechargeable batteries include an electrode assembly including a positive electrode and a negative electrode and a separator interposed therebetween. The positive electrode and the negative electrode are formed by applying an active material to a current collector made of metal, and the current collector is provided with a coating region in which the active material is coated on the current collector and an uncoated region in which the active material is not coated thereon.

The electrode assembly is spiral-wound and is then thermo-compressed. In the thermo-compressed electrode assembly, strength is increased, thereby maintaining its shape despite outer impact. Furthermore, thickness of a cell is decreased, thereby increasing energy density per unit volume. In addition, the electrode assembly in which the thickness of the cell is reduced, caused by the thermo-compression, is easily inserted into a case.

However, when impact acts on the sides of the case, the electrode assembly is broken, such that an internal short-circuit may occur. Further, an interval between the electrodes of the electrode assembly caused by the thermo-compression is reduced, such that electrolyte solution wetting performance is deteriorated.
The exemplary embodiments solve the above problem to provide an electrode assembly and a rechargeable battery in which safety in relation to a compressive force applied to the sides of the battery is improved.

KR 2008 0022914 relates to an electrode assembly having elements that prevent electrode tabs becoming compressed when the electrode assembly is wound. WO2012/127623 relates to an electrode assembly having compressed end regions.

According to the invention, there is provided an electrode assembly for a secondary battery according to claim 1. According to another aspect of the invention, there is provided a method of manufacturing an electrode assembly according to claim 13. Optional features are set out in the dependent claims.

The first and second electrode tabs may extend from within the body of the electrode assembly to a position outside the body of the electrode assembly, such that the portion of the first and second electrode tabs within the body of the electrode assembly lie in the first region. In other words, the first, uncompressed, region encompasses the whole of the electrode tabs.

The first and second electrode tabs may be offset from one another across the width of the electrode assembly or the first and second electrode tabs may be aligned behind one another across the depth of the electrode assembly.

The first region may extend from the top of the electrode assembly to the bottom of the electrode assembly.

The first and second electrode tabs may extend from the first region at opposite ends of the body of the electrode assembly.

The first region may extend from the top of the electrode assembly part way to the bottom of the electrode assembly. For example, the first region extends substantially to the bottom of the first and second electrode tabs within the body.

The electrode assembly may further comprise a third region having the same thickness as the first region, wherein the first electrode tab extends from a position within the first region and the second electrode tab extends from a position within the third region, wherein the first and third regions are spaced apart from one another by a fourth region of the same thickness as the second region.

The first and third regions may extend the whole length of the electrode assembly or the first and third regions may extend partially from the top of the electrode assembly towards the bottom of the electrode assembly.

The first electrode tab and the second electrode tab may extend from within the body of the electrode assembly to a position outside the body of the electrode assembly, wherein the portion of the first electrode tab within the body of the electrode assembly lies in the first region and the portion of the second electrode tab within the body of the electrode assembly lies in the second region.

The first and second electrode tabs may extend from a side of the electrode assembly and the first region may extend across the width of the electrode assembly.

Regions of the electrode assembly other than the first region may be thermo-compressed, so as to provide a thickness that is less than the thickness of the first region. In other words, the variation in thickness may be achieved by thermo-compressing certain regions to achieve the thinner regions and leaving the thicker regions uncompressed.

A secondary battery may comprise the electrode assembly as described above.

According to a further aspect, there is provided a method of manufacturing an electrode assembly that comprises a first region from which an electrode tab extends, the method comprising compressing a second region outside the first region, such that the first region is thicker than the second region.

The step of compressing the second region may comprise compressing the second region using heated plates.

The heated plates may be arranged in a predetermined pattern so as to thermo-compress regions other than the first region.

Embodiments of the invention will now be described by way of example with reference to the accompanying drawings, in which:
FIG. 1 is an exploded perspective view showing a rechargeable battery according to a first exemplary embodiment.
FIG. 2 is a perspective view showing a process of thermo-compressing an electrode assembly according to the first exemplary embodiment.
FIG. 3 is a side view showing a process of thermo-compressing an electrode assembly according to the first exemplary embodiment.
FIG. 4 is a top plan view showing a thermo-compressed electrode assembly according to the first exemplary embodiment.
FIG. 5 is a cross-sectional view showing an electrode assembly according to the first exemplary embodiment.
FIG. 6 is a cross-sectional view showing a state in which a rechargeable battery is bent due to a compressive force applied to the sides of the rechargeable battery according to the first exemplary embodiment.
FIG. 7A is a photograph showing a surface of the electrode assembly thermo-compressed in a scheme according to the related art, and FIG. 7B is a photograph showing a surface of the electrode assembly according to the first exemplary embodiment.
FIG. 8A is a photograph showing a state in which a rechargeable battery according to the related art is deformed by a compressive force applied to the sides of the battery, and FIG. 8B is a photograph showing a state in which a rechargeable battery according to the first exemplary embodiment is deformed by a compressive force applied to the sides of the battery.
FIG. 9 is a side view showing a process of thermo-compressing an electrode assembly according to a second exemplary embodiment.
FIG. 10 is a top plan view showing a thermo-compressed electrode assembly according to the second exemplary embodiment.
FIG. 11 is a side view showing a process of thermo-compressing an electrode assembly according to a third exemplary embodiment.
FIG. 12 is a top plan view showing a thermo-compressed electrode assembly according to the third exemplary embodiment.
FIG. 13 is a side view showing a process of thermo-compressing an electrode assembly according to a fourth exemplary embodiment.
FIG. 14 is a top plan view showing a thermo-compressed electrode assembly according to the fourth exemplary embodiment.
FIG. 15 is a side view showing a process of thermo-compressing an electrode assembly according to a fifth exemplary embodiment.
FIG. 16 is a top plan view showing a thermo-compressed electrode assembly according to the fifth exemplary embodiment.
FIG. 17 is a side view showing a process of thermo-compressing an electrode assembly according to a sixth exemplary embodiment.
FIG. 18 is a top plan view showing a thermo-compressed electrode assembly according to the sixth exemplary embodiment.
FIG. 19 is a side view showing a process of thermo-compressing an electrode assembly according to a seventh exemplary embodiment.
FIG. 20 is a top plan view showing a thermo-compressed electrode assembly according to the seventh exemplary embodiment.
FIG. 21 is a perspective view showing a process of thermo-compressing an electrode assembly according to an eighth exemplary embodiment.

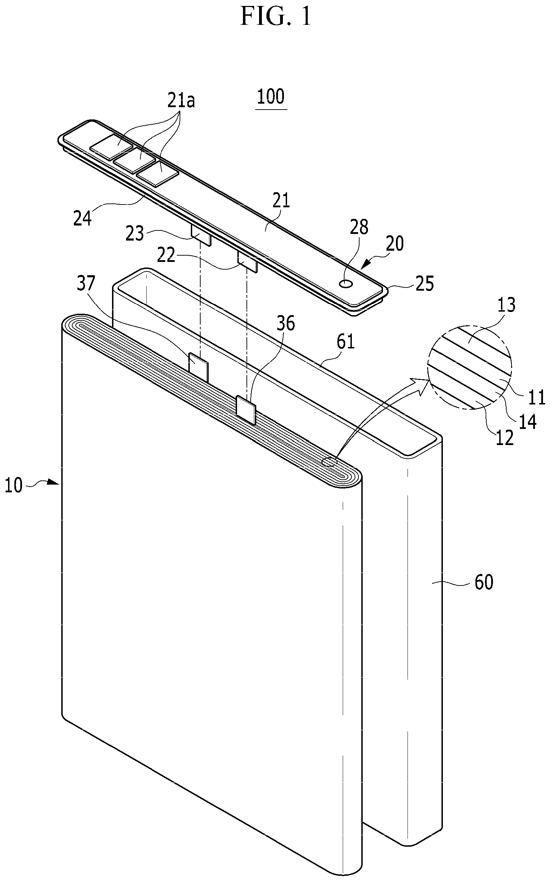

Referring to FIG. 1, the rechargeable battery 100 according to the exemplary embodiment includes an electrode assembly 10, a cap assembly 20, and a case 60 bonded to the cap assembly 20. Hereinafter, although a rectangular battery is described by way of an example in the present embodiment, the exemplary embodiment is not limited thereto. The present invention may be applied to various rechargeable batteries such as a pouch battery, a lithium polymer battery, and the like.

The electrode assembly 10 includes a positive electrode 11, a negative electrode 12, and a separator 13,14 disposed therebetween. The positive electrode 11 is formed to have a stripe shape that extends in the longitudinal direction of the assembly and includes a positive electrode coated region in which a positive electrode active material layer is formed and a positive electrode uncoated region in which the active material is not coated. The positive electrode uncoated region is positioned at one side end of the positive electrode 11 in a length direction.

The negative electrode 12 is formed to have a stripe shape that extends in the longitudinal direction of the assembly and includes a negative electrode coated region in which a negative electrode active material layer is formed and a negative electrode uncoated region in which the active material is not coated. The negative electrode uncoated region is positioned at one side end of the negative electrode 12 in a length direction. The positive electrode 11 and the negative electrode 12 have the separator 13,14, which is an insulator, interposed therebetween, and are spiral-wound together with the separator 13,14 to have a jelly roll form.

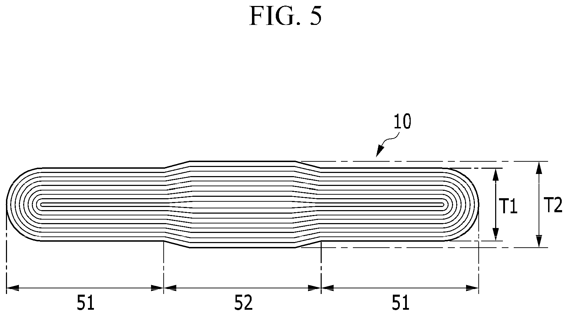

As shown in FIG. 5, the separator 13,14 is divided into a first separator 13 and a second separator 14, and forms the electrode assembly 10 by winding in a state in which the positive electrode 11, the first separator 13, the negative electrode 12, and the second separator 14 are sequentially stacked.

The first separator 13 includes a polymer layer 13b and a ceramic layer 13a coated on the polymer layer 13b. In addition, the first separator 13 is provided with adhesive layers 13c and 13d formed on outer surfaces thereof, respectively. That is, the surface toward the outside in the polymer layer 13b is coated with the adhesive layer 13d and the surface toward the outside in the ceramic layer 13a is coated with the adhesive layer 13c. The polymer layer 13b may be made of a porous polyethylene. Here, the ceramic layer 13a is disposed to be adjacent to the negative electrode 12 and the polymer layer 13b is disposed to be adjacent to the positive electrode 11.

The second separator 14 includes a polymer layer 14b and a ceramic layer 14a coated on the polymer layer 14b. In addition, the second separator 14 has the outer surface in which the adhesive layer is not formed. Here, the ceramic layer 14a is disposed to be adjacent to the negative electrode 12 and the polymer layer 14b is disposed to be adjacent to the positive electrode 11.

The ceramic layers 13a and 14a have better electrolyte solution wetting performance than the polymer layers 13b and 14b. When the ceramic layers 13a and 14a according to the exemplary embodiment are disposed to be adjacent to the negative electrode 12, the ceramic layers 13a and 14a supply more electrolyte solution to the negative electrode 12, thereby making it possible to improve reactivity.

In addition, if the adhesive layer 13d is formed in only one of separators 13,14, damage to the electrode assembly 10 may be prevented when a compressive force is applied to on the sides of the rechargeable battery 100. If the adhesive layer 13d is formed in both of the separators 13, 14, an interval between the electrodes is reduced, such that the thickness of the electrode assembly 10 may be reduced, but flexibility of the electrode assembly 10 is deteriorated, such that the electrode assembly 10 is damaged due to the compressive force. Further, if the adhesive layer 13d is not formed in either of the separators 13, 14, the interval between the electrodes increases and the electrode assembly 10 expands.

However, in the exemplary embodiment, the adhesive layer 13d is formed in only one of the separators 13, 14, thereby making it possible to prevent the electrode assembly 10 from being damaged when the compressive force acts on the rechargeable battery 100, even while reducing the thickness thereof.

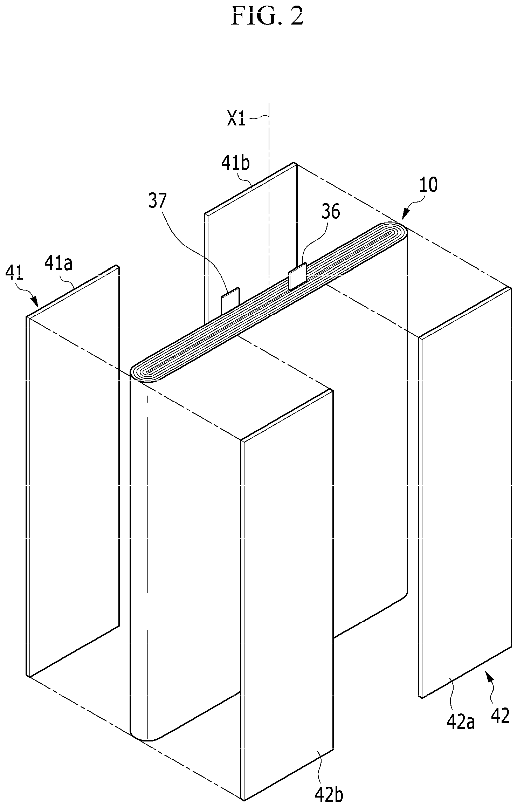

A positive electrode tab 36 is fixedly installed in the positive electrode 11 and a negative electrode tab 37 is fixedly installed in the negative electrode 12. The positive electrode tab 36 and the negative electrode tab 37 are disposed in parallel with a winding shaft X1 (shown in Fig. 2), and are installed to protrude from a cross-sectional part of the electrode assembly 10 of which layers are exposed.

A cap assembly 20 includes a circuit board 21, a first lead tab 22, and a second lead tab 23. The cap assembly 20 is coupled with an opening 61 of the case 60 and is connected with the electrode assembly 10 to control an operation the electrode assembly 10.

The first lead tab 22 is made of an electrically conductive material such as nickel and is electrically connected to the circuit board 21. The first lead tab 22 serves to electrically connect the circuit board 21 to the electrode assembly 10 and is installed to the central portion of a first surface in the circuit board 21. The first lead tab 22 is connected with the positive electrode tab 36 of the electrode assembly 10 by welding.

The second lead tab 23 is positioned at the one side end of the circuit board 21 in a length direction and serves to electrically connect the circuit board 21 to the electrode assembly 10. The second lead tab 23 is made of an electrically conductive material such as nickel and is connected with the negative electrode tab 37 by the welding.

The circuit board 21, which is a printed circuit board on which a wiring pattern is printed, is formed to have a rectangular thin flat shape that is lengthily expended in one direction. A protective circuit device is mounted in the circuit board 21. The protective circuit device is formed of a device such as control IC, a charging and discharging switch, and the like. The circuit board 21 is provided with a molding part 24 enclosing the protective circuit device on a lower portion thereof.

Further, the circuit board 21 is provided with an outer terminal 21a electrically connected to a charger or an external load and installed therein. Furthermore, the circuit board 21 is provided with an electrolyte injection opening for injecting the electrolyte solution, wherein the electrolyte injection opening is provided with a sealing closure 28 sealing the electrolyte injection opening.

The cap assembly 20 is provided with a bonding part 25 extended around the circumference of the circuit board 21. The circuit board 21 is formed to have a rectangular flat shape, and the bonding part 25 is protruded from the outside of the circuit board 21 to have an approximately rectangular ring shape. The bonding part 25 is bonded to the opening 61 formed in the case 60 by methods such as welding and the like to seal the case 60.

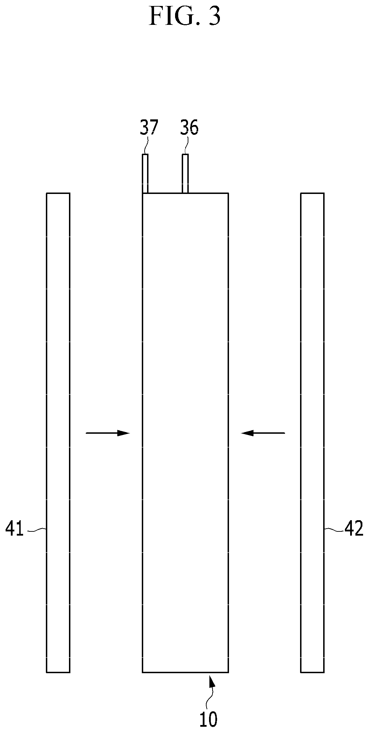

FIG. 2 is a perspective view showing a process of thermo-compressing an electrode assembly according to the first exemplary embodiment and FIG. 3 is a side view showing a process of thermo-compressing an electrode assembly according to the first exemplary embodiment.

The electrode assembly 10 is spiral-wound and then is thermo-compressed by a first pressing plate 41 and a second pressing plate 42. The first pressing plate 41 and the second pressing plate 42 are heated in advance and compress the electrode assembly 10, such that the positive electrode 11 and the negative electrode 12 are closely adhered to the separators 13, 14.

The first pressing plate 41 includes a first board 41a and a second board 41b spaced apart from the first board 41a. The first board 41a is spaced apart from the second board 41b by a predetermined interval. The first board 41a and the second board 41b are disposed outside the region occupied by the positive electrode tab 36 and the negative electrode tab 37, respectively, towards the outside of the electrode assembly. That is, the first board 41a is disposed further outside than the negative electrode tab 37 in a width direction of the electrode assembly 10 and the second board 41b is disposed further outside than the positive electrode tab 36 in the width direction of the electrode assembly 10.

In addition, the second pressing plate 42 has the same shape as the first pressing plate 41 and includes a first board 42a and a second board 42b spaced from the first board 42a. The first board 42a is spaced apart from the second board 42b by a predetermined interval. The first board 42a and the second board 42b are disposed outside the region occupied by the positive electrode tab 36 and the negative electrode tab 37, respectively. That is, the first board 42a is disposed further outside than the negative electrode tab 37 in a width direction of the electrode assembly 10 and the second board 42b is disposed further outside than the positive electrode tab 36 in the width direction of the electrode assembly 10.

The first pressing plate 41 and the second pressing plate 42 press flat front and rear surfaces of the electrode assembly 10, respectively.

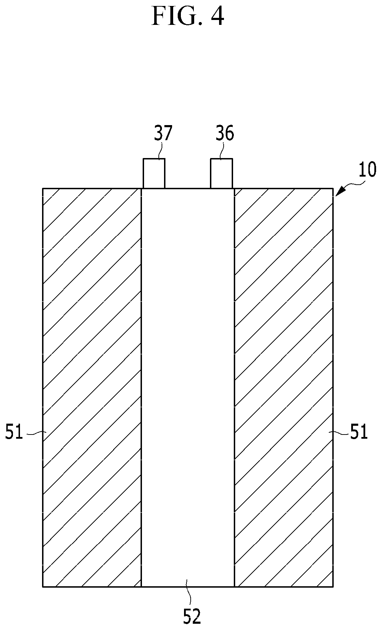

FIG. 4 is a top plan view showing a thermo-compressed electrode assembly 10 according to the first exemplary embodiment and FIG. 5 is a cross-sectional view showing an electrode assembly 10 according to the first exemplary embodiment.

Referring to FIGS. 4 and 5, the electrode assembly 10 is provided with a first region 51, also referred to as a pressing region, which is compressed by the pressing plates 41 and 42 and a second region 52, also referred to as a non-pressing region, which is not compressed.

The two pressing regions 51 are formed at the outside based on the width direction of the electrode assembly 10 and the non-pressing region 52 is formed between the pressing regions 51. The non-pressing region 52 is disposed at the central portion of the electrode assembly 10 in the width direction and is enclosed by the pressing region 51. The non-pressing region 52 is extended in the length or axial direction of the winding shaft X1around which the electrode assembly 10 is spiral-wound and is extended from the one side end of the electrode assembly 10 to the other side end thereof.

The positive electrode 11 and the negative electrode 12 in the pressing region 51 are closely adhered to the separators 13, 14, such that thickness T1 of the pressing region 51 is smaller than a thickness T2 of the non-pressing region 52. An interval between the positive electrode 11 and the separators 13, 14 in the pressing region 51 is smaller than that of between the positive electrode 11 and the separators 13, 14 in the non-pressing region 52. In addition, an interval between the negative electrode 12 and the separators 13, 14 in the pressing region 51 is smaller than that between the negative electrode 12 and the separators 13, 14 in the non-pressing region 52. Therefore, the non-pressing region 52 may absorb a larger amount of electrolyte solution than the pressing region 51.

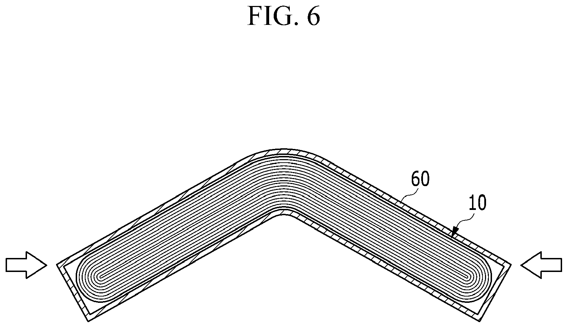

In addition, the non-pressing region 52 is not thermo-compressed to have greater flexibility compared to the pressing region 51, such that the non-pressing region 52 is not easily broken and may be easily bent. As shown in FIG. 6, when the compressive force acts on the sides of the rechargeable battery 100, the non-pressing region 52 is bent, thereby making it possible to prevent the electrode assembly 10 from being damaged.

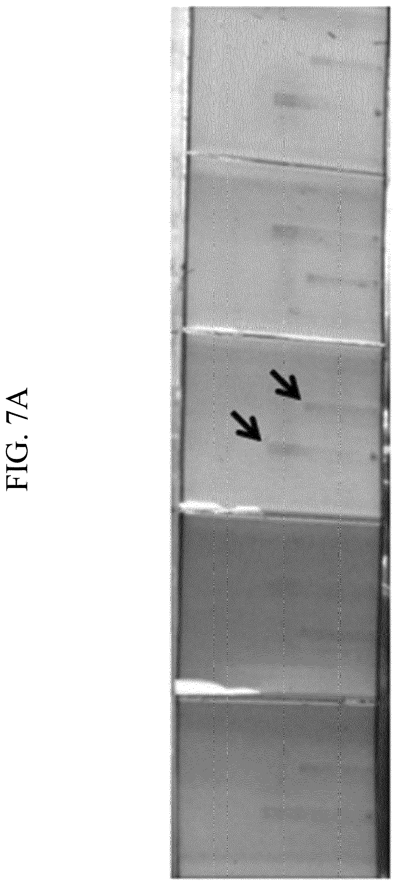

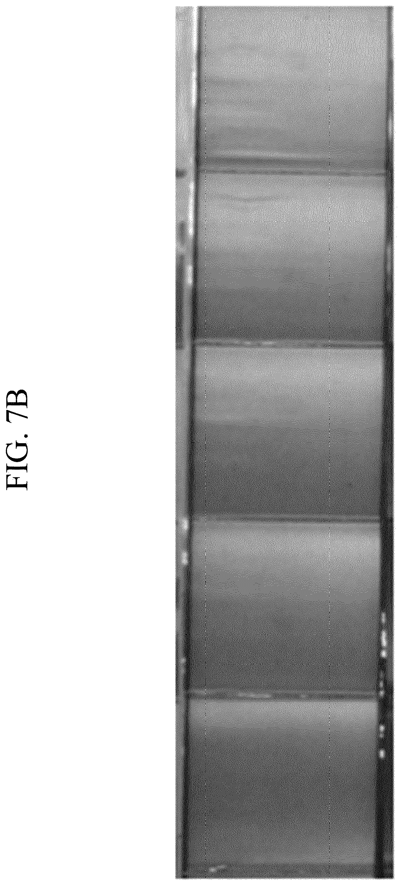

FIG. 7A is a photograph showing a surface of the electrode assembly thermo-compressed in a scheme according to the related art, and FIG. 7B is a photograph showing a surface of the electrode assembly 10 according to the first exemplary embodiment.

Referring to FIGS. 7A and 7B, the electrode assembly according to the related art can be appreciated that lithium is extracted on the surface of the negative electrode at a portion at which the positive electrode tab and the negative electrode tab are disposed, as shown by the dark shapes in FIG. 7A.

Since the portion at which the positive electrode tab 11 and the negative electrode tab 12 are positioned is relatively thick as compared with the other portion, the lithium is extracted due to the pressure by the pressing plates 41, 42.

However, according to the exemplary embodiment, since a portion at which the positive electrode tab 11 and the negative electrode tab 12 are positioned is not pressed by the pressing plates 41,42, lithium is not extracted in the surface of the negative electrode, as shown by the absence of dark shapes in FIG. 7B corresponding to those in FIG. 7A.

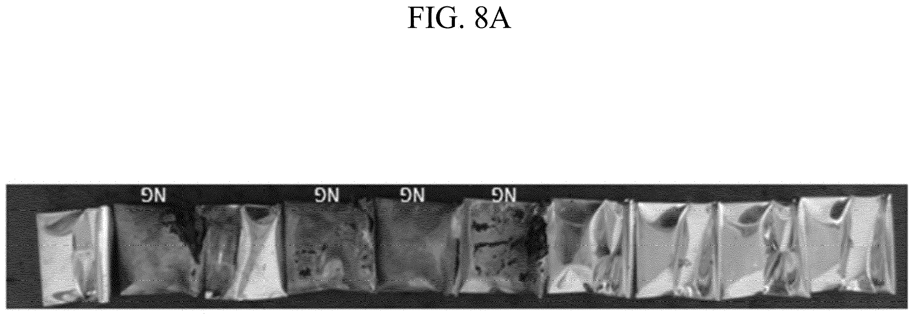

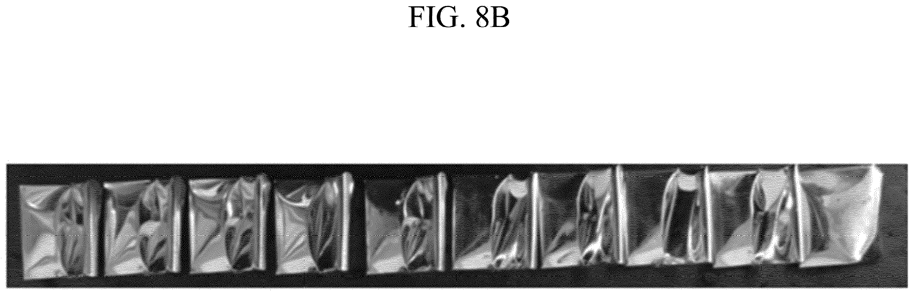

FIG. 8A is a photograph showing a state in which a rechargeable battery according to the related art is deformed by a compressive force acting on the sides of the battery, and FIG. 8B is a photograph showing a state in which a rechargeable battery 100 according to the first exemplary embodiment is deformed by a similar compressive force.

Referring to FIGS. 8A and 8B, after the rectangular rechargeable battery 100 having a metal case, capacity of 2800mA, a voltage of 3.8V, thickness of 5mm, width of 57mm, and a height of 61mm is charged, the compressive force acts to test the safety.

As shown in FIG. 8A, in the case in which the front surface of the electrode assembly according to the related art is pressed, it can be seen that four rechargeable batteries among the ten rechargeable batteries are ignited and blackened when the compressive force acts on the rechargeable battery. However, as shown in FIG. 8B, it can be seen that a fire does not break out even though the rechargeable batteries are deformed when using rechargeable batteries according to the exemplary embodiment.

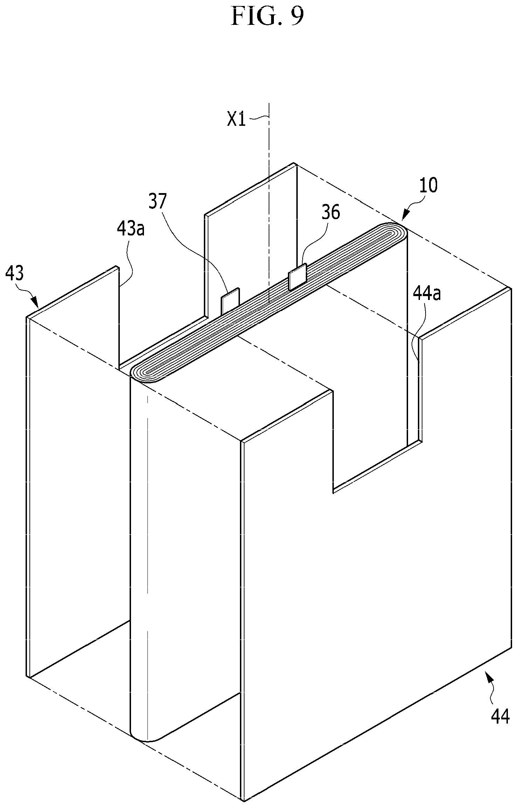

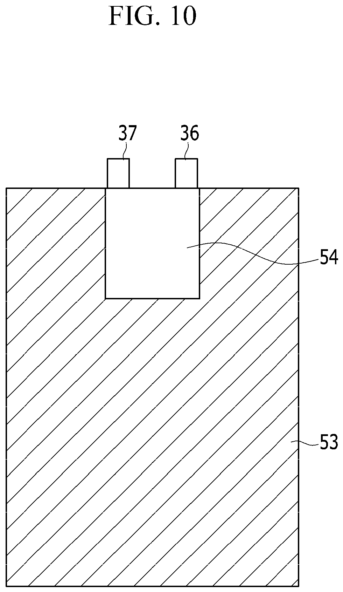

FIG. 9 is a side view showing a process of thermo-compressing an electrode assembly 10 according to a second exemplary embodiment and FIG. 10 is a top plan view showing a thermo-compressed electrode assembly 10 according to the second exemplary embodiment.

Referring to FIGS. 9 and 10, since the electrode assembly 10 according to the exemplary embodiment has the same structure as that in the rechargeable battery 100 according to the first exemplary embodiment other than the thermo-compressed structure and therefore, the description of the same structure will be omitted.

The electrode assembly 10 is spiral-wound and then is thermo-compressed by a first pressing plate 43 and a second pressing plate 44. The first pressing plate 43 and the second pressing plate 44 are heated in advance and compress the electrode assembly 10, such that the positive electrode 11 and the negative electrode 12 are closely adhered to the separators 13, 14.

The first pressing plate 43 is formed of a quadrangular flat shape, and is provided with a slit part 43a. The slit part 43a is formed at a position corresponding to an upper end portion at which the positive electrode tab 36 and the negative electrode tab 37 are positioned in the electrode assembly 10.

In addition, the second pressing plate 44 has a same shape as the first pressing plate 43, and the second pressing plate 44 is provided with a cut slit part 44a. The slit part 44a is formed at the upper end of the second pressing plate 44.

When the electrode assembly 10 is thermo-compressed by using the pressing plates 43,44, the electrode assembly 10 is provided with the pressing region 53 and the non-pressing region 54 as shown in FIG. 10. The non-pressing region 54 is formed to contact the end portion from which the electrode tabs 36 and 37 protrude at the centre of the electrode assembly 10 in the width direction. The non-pressing region 54 is extended in the axial direction of the winding shaft X1 from the end portion from which the electrode tabs 36 and 37 protrude, and the non-pressing region 54 is enclosed by the pressing region 53.

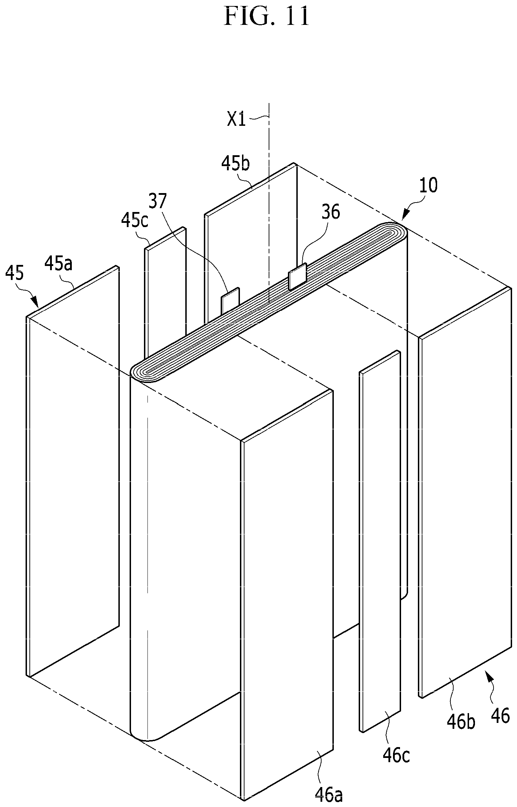

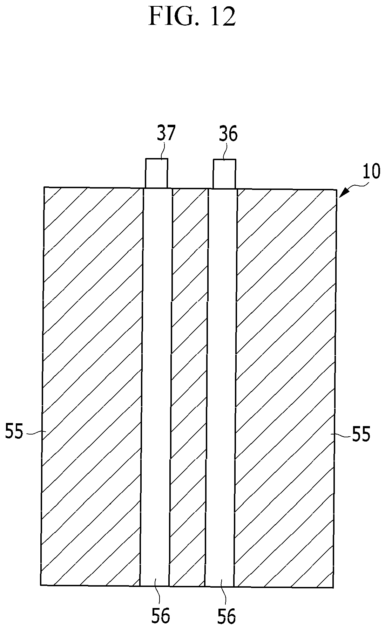

FIG. 11 is a side view showing a process of thermo-compressing an electrode assembly 10 according to a third exemplary embodiment and FIG. 12 is a top plan view showing a thermo-compressed electrode assembly 10 according to the third exemplary embodiment.

Referring to FIGS. 11 and 12, since the electrode assembly 10 according to the exemplary embodiment has the same structure as that in the rechargeable battery 100 according to the first exemplary embodiment other than the thermo-compressed structure and therefore, the description of the same structure will be omitted.

The electrode assembly 10 is spiral-wound and is then thermo-compressed by a first pressing plate 45 and a second pressing plate 46. The first pressing plate 45 and the second pressing plate 46 are heated in advance and compress the electrode assembly 10, such that the positive electrode 11 and the negative electrode 12 are closely adhered to the separators 13, 14.

The first pressing plate 45 includes a first board 45a, a second board 45b spaced from the first board 45a, and a third board 45c disposed between the first board 45a and the second board 45b.

The first board 45a and the second board 45b are disposed further outside than the positive electrode tab 36 and the negative electrode tab 37, respectively. In addition, the negative electrode tab 37 is disposed between the first board 45a and the third board 45c and the positive electrode tab 36 is disposed between the second board 45b and the third board 45c.

The second pressing plate 46 has the same shape as the first pressing plate 45 and includes a first board 46a, a second board 46b spaced from the first board 46a, and a third board 46c disposed between the first board 46a and the second board 46b. The first board 46a is spaced apart from the second board 46b by a predetermined interval. The first board 46a and the second board 46b are disposed further outside than the positive electrode tab 36 and the negative electrode tab 37, respectively. In addition, the negative electrode tab 37 is disposed between the first board 46a and the third board 46c and the positive electrode tab 36 is disposed between the second board 46b and the third board 46c.

The electrode assembly 10 is provided with a pressing region 55 which is compressed by the pressing plates 45 and 46 and a non-pressing region 56 which is not compressed. The three pressing regions 55 are formed at both outer sides and the centre based on the width direction of the electrode assembly 10 and the two non-pressing regions 56 are formed between the pressing regions 55. The non-pressing regions 56 are enclosed by the pressing regions 55.

The non-pressing region 56 is extended in the axial direction of the winding shaft Xi around which the electrode assembly 10 is spiral-wound and is extended from the one side of the electrode assembly 10 to the other side thereof.

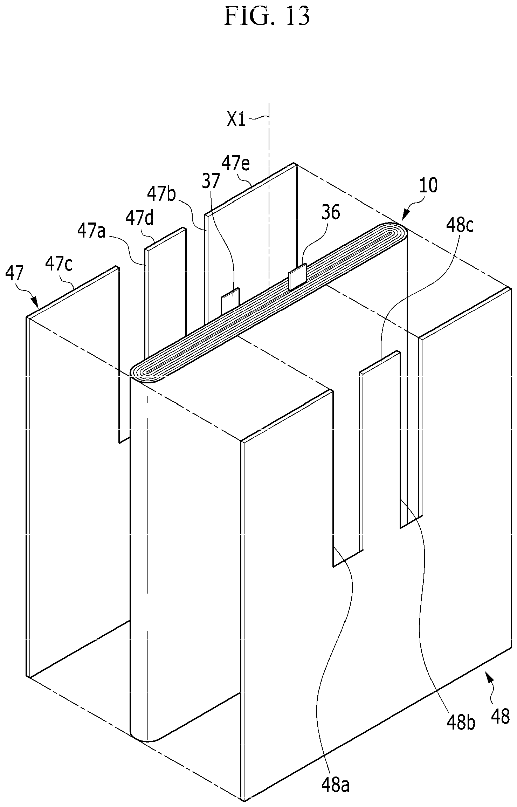

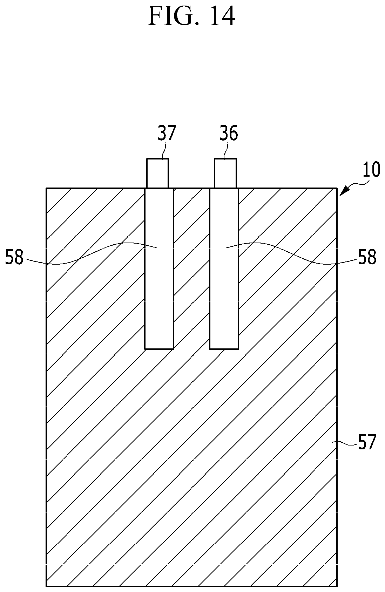

FIG. 13 is a side view showing a process of thermo-compressing an electrode assembly according to a fourth exemplary embodiment and FIG. 14 is a top plan view showing a thermo-compressed electrode assembly according to the fourth exemplary embodiment.

Referring to FIGS. 13 and 14, since the electrode assembly 10 according to the exemplary embodiment has the same structure as that in the rechargeable battery 100 according to the first exemplary embodiment other than the thermo-compressed structure and therefore, the description of the same structure will be omitted.

The electrode assembly 10 is spiral-wound and is then thermo-compressed by a first pressing plate 47 and a second pressing plate 48. The first pressing plate 47 and the second pressing plate 48 are heated in advance and compress the electrode assembly 10, such that the positive electrode 11 and the negative electrode 12 are closely adhered to the separators 13, 14.

The first pressing plate 47 is formed in a flat quadrangular shape, and is provided with a first slit part 47a and a second slit part 47b. The first slit part 47a is disposed to be spaced apart from the second slit part 47b in the width direction of the electrode assembly 10, and the first slit part 47a and the second slit part 47b have a protrusion 47dformed therebetween.

The first slit part 47a is formed at a position corresponding to the negative electrode tab 37 in the electrode assembly 10 and the second slit part 47b is formed at a position corresponding to the positive electrode tab 36 in the electrode assembly 10.

The second pressing plate 48 has the same shape as the first pressing plate 47, and the second pressing plate 48 is provided with a first slit part 48a and a second slit part 48b. The first slit part 48a is disposed to be spaced apart from the second slit part 48b in the width direction of the electrode assembly 10, and the first slit part 48a and the second slit part 48b have a protrusion 48c formed therebetween.

The first slit part 48a is formed at a position corresponding to the negative electrode tab 37 in the electrode assembly 10 and the second slit part 48b is formed at a position corresponding to the positive electrode tab 36 in the electrode assembly 10.

When the electrode assembly 10 is thermo-compressed by using the pressing plates 47 and 48, the electrode assembly 10 is provided with the pressing region 57 and the non-pressing regions 58 as shown in FIG. 14. The two non-pressing regions 58 disposed to be spaced apart from each other are formed to contact the portions from which the electrode tabs 36,37 protrude in the electrode assembly 10. The non-pressing regions 58 are extended in the axial direction of the winding shaft X1 from the end portion from which the electrode tabs 36,37 protrude, and the non-pressing regions 58 are enclosed by the pressing region 57.

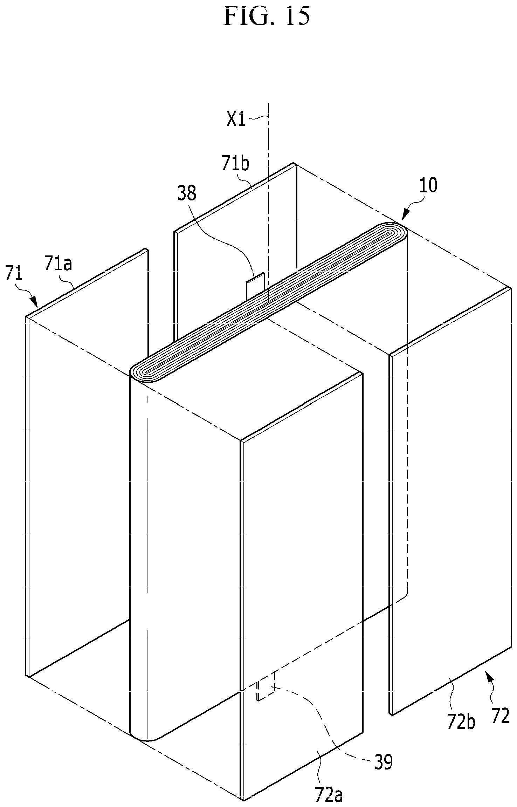

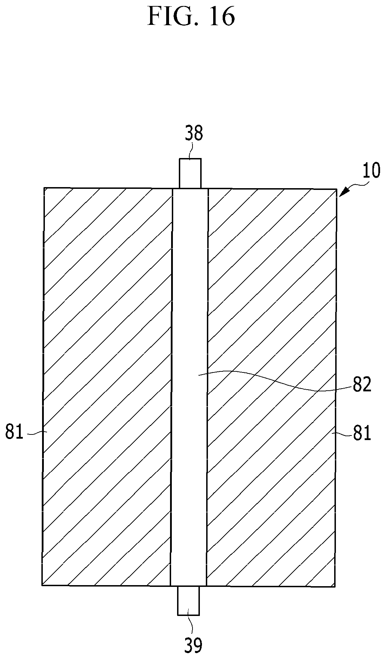

FIG. 15 is a side view showing a process of thermo-compressing an electrode assembly 10 according to a fifth exemplary embodiment and FIG. 16 is a top plan view showing a thermo-compressed electrode assembly 10 according to the fifth exemplary embodiment.

Referring to FIGS. 15 and 16, since the electrode assembly according to the exemplary embodiment has the same structure as that in the rechargeable battery 100 according to the first exemplary embodiment other than the thermo-compressed structure and installing structure of the lead tab and therefore, the description of the same structure will be omitted.

The electrode assembly 10 is formed of a structure that has the positive electrode 11 and the negative electrode 12 spiral-wound and having the separator 13,14 interposed therebetween. The electrode assembly 10 is provided with the positive electrode tab 38 and the negative electrode tab 39. The positive electrode tab 38 and the negative electrode tab 39 are disposed at the centre of the electrode assembly 10 in the width direction, wherein the positive electrode tab 38 protrudes from the top end of the electrode assembly 10 and the negative electrode tab 39 protrudes from the bottom end of the electrode assembly 10, substantially opposite the positive electrode tab 38. Therefore, the positive electrode tab 38 and the negative electrode tab 39 are disposed in a straight line.

The electrode assembly 10 is thermo-compressed by a first pressing plate 71 and a second pressing plate 72. The first pressing plate 71 and the second pressing plate 72 are heated in advance and compress the electrode assembly 10, such that the positive electrode 11 and the negative electrode 12 are closely adhered to the separators 13,14.

The first pressing plate 71 includes a first board 71a and a second board 71b spaced from the first board 71a. The first board 71a and the second board 71b are disposed further outside than the positive electrode tab 38 and the negative electrode tab 39, and therefore the first board 71a and the second board 71b have the positive electrode tab 38 and the negative electrode tab 39 disposed therebetween.

In addition, the second pressing plate 72 has the same shape as the first pressing plate 71 and includes a first board 72a and a second board 72b spaced from the first board 72a. The first board 72a is spaced apart from the second board 72b by a predetermined interval. The first board 72a and the second board 72b have the positive electrode tab 38 and the negative electrode tab 39 disposed therebetween.

The electrode assembly 10 is provided with pressing regions 81 which are compressed by the pressing plates 71 and 72 and a non-pressing region 82 which is not compressed. The pressing regions 81 are formed at the outside edges of the electrode assembly 10 based on the width direction and the non-pressing region 82 is formed between the pressing regions 81.

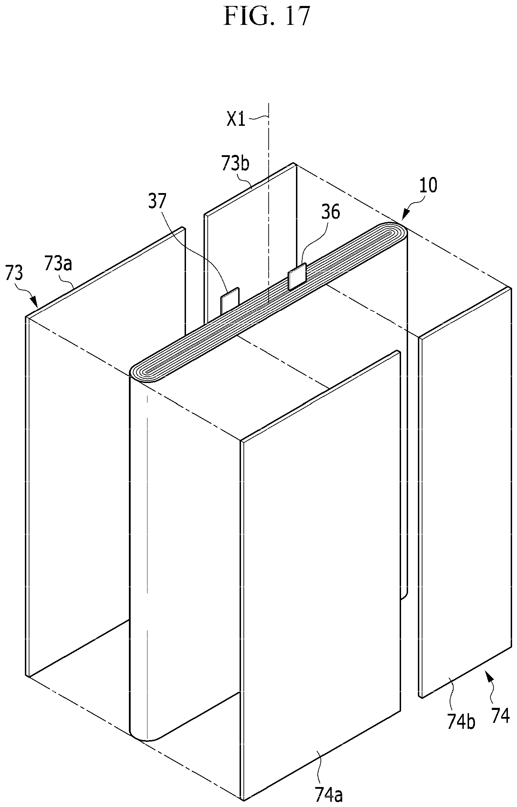

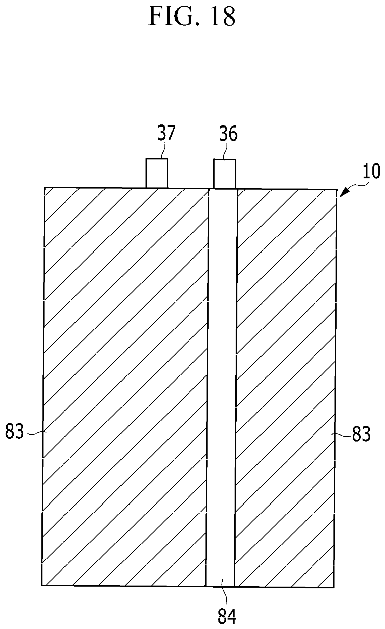

FIG. 17 is a side view showing a process of thermo-compressing an electrode assembly 10 according to a sixth exemplary embodiment and FIG. 18 is a top plan view showing a thermo-compressed electrode assembly 10 according to the sixth exemplary embodiment.

Referring to FIGS. 17 and 18, since the electrode assembly according to the exemplary embodiment has the same structure as that in the rechargeable battery 100 according to the first exemplary embodiment other than the thermo-compressed structure and therefore, the description of the same structure will be omitted.

The electrode assembly 10 is formed of a structure that has the positive electrode 11 and the negative electrode 12 spiral-wound with the separator 13, 14 interposed therebetween. The electrode assembly 10 is provided with the positive electrode tab 36 and the negative electrode tab 37. The positive electrode tab 36 and the negative electrode tab 37 are disposed to be spaced apart in the electrode assembly 10 in the width direction, or offset from one another.

The electrode assembly 10 is thermo-compressed by a first pressing plate 73 and a second pressing plate 74. The first pressing plate 73 and the second pressing plate 74 are heated in advance and compress the electrode assembly 10, such that the positive electrode 11 and the negative electrode 12 are closely adhered to the separators 13, 14.

The first pressing plate 73 includes a first board 73a and a second board 73b spaced from the first board 73a. The first board 73a and the second board 73b are disposed at further outside than the positive electrode tab 36, and the positive electrode tab 36 is disposed between the first board 73a and the second board 73b. Meanwhile, the negative electrode tab 37 is disposed to overlap with the first board 73a and is compressed by the first board 73a.

In addition, the second press plate 74 has the same shape as the first press plate 73 and includes a first board 74a and a second board 74b spaced from the first board 74a. The first board 74a is spaced apart from the second board 72b by a predetermined interval. The first board 74a and the second board 72b have the positive electrode tab 36 disposed therebetween. Meanwhile, the negative electrode tab 37 is disposed to overlap with the first board 74a and is compressed by the first board 74a.

The electrode assembly 10 is provided with pressing regions 83 which are compressed by the pressing plates 73 and 74 and a non-pressing region 84 which is not compressed. The pressing regions 83 are formed at the outer edges of the electrode assembly 10 based on the width direction and the non-pressing region 84 is formed between the pressing regions 83. Here, the non-pressing region 84 is disposed while being offset from the centre of the electrode assembly 10 in the width direction.

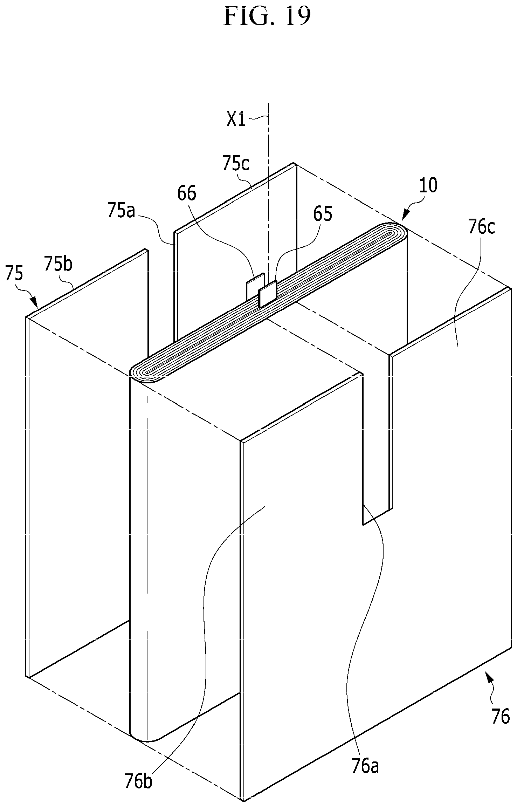

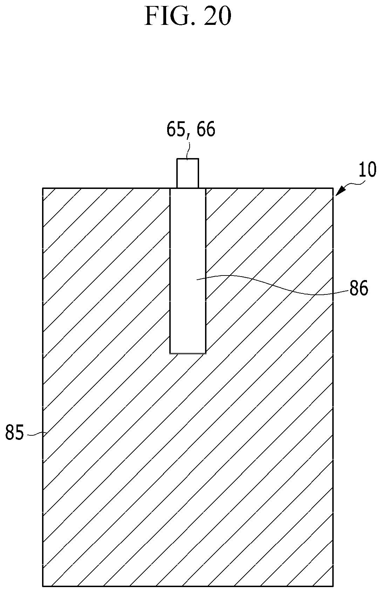

FIG. 19 is a side view showing a process of thermo-compressing an electrode assembly 10 according to a seventh exemplary embodiment and FIG. 20 is a top plan view showing a thermo-compressed electrode assembly 10 according to the seventh exemplary embodiment.

Referring to FIGS. 19 and 20, since the electrode assembly according to the exemplary embodiment has the same structure as that in the rechargeable battery 100 according to the first exemplary embodiment other than the thermo-compressed structure and installing structure of the lead tap and therefore, the description of the same structure will be omitted.

The electrode assembly 10 is formed of a structure having the positive electrode 11 and the negative electrode 12 spiral-wound and having the separator 13,14 interposed therebetween. The electrode assembly 10 is provided with the positive electrode tab 65 and the negative electrode tab 66. The positive electrode tab 65 and the negative electrode tab 66 are disposed at the center of the electrode assembly 10 in the width direction and are protruded from the top end of the electrode assembly 10. The positive electrode tab 65 and the negative electrode tab 66 are disposed to be spaced apart and disposed to be overlapped in the electrode assembly 10, in the width direction, in other words are aligned behind one another across the depth of the electrode assembly.

The electrode assembly 10 is thermo-compressed by a first press plate 75 and a second press plate 76. The first pressing plate 75 and the second pressing plate 76 are heated in advance and compress the electrode assembly 10, such that the positive electrode 11 and the negative electrode 12 are closely adhered to the separators 13, 14.

A slit part 75a is formed in the first pressing plate 75, and the slit part 75a is formed at a position corresponding to the positive electrode tab 65 and the negative electrode tab 66. In addition, the second pressing plate 76 is formed in the same manner as the first pressing plate 75. A slit part 76a is formed in the second pressing plate 76, and the slit part 76a is formed at the position corresponding to the positive electrode tab 65 and the negative electrode tab 66.

If the electrode assembly 10 is thermo-compressed by using the pressing plates 75 and 76, the electrode assembly 10 is provided with the pressing region 85 and the non-pressing region 86. The non-pressing region 86 is formed to contact the end portion from which the electrode tabs 65,66 are protruded at the center of the electrode assembly 10 in the width direction. The non-pressing region 86 is extended in the axial direction of the winding shaft X1from the end portion from which the electrode tabs 65, 66 are protruded, and the non-pressing region 86 is enclosed by the pressing region 85.

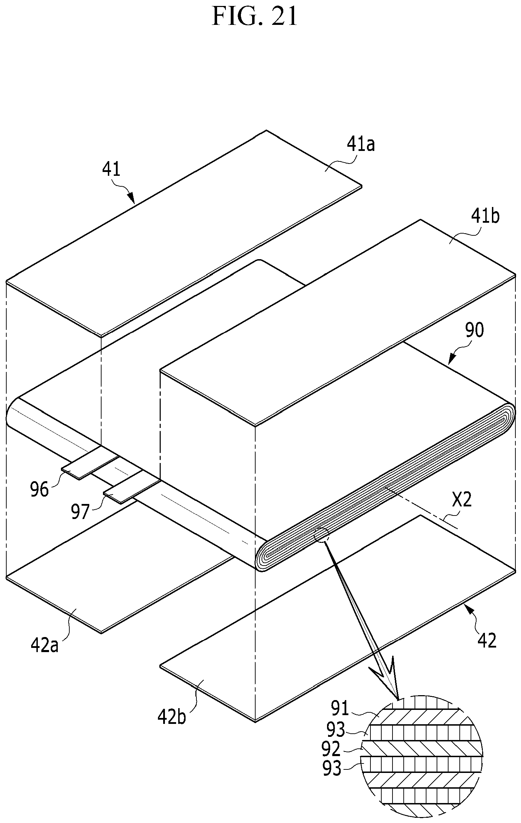

FIG. 21 is a perspective view showing a process of thermo-compressing an electrode assembly 90 according to an eighth exemplary embodiment.

Referring to FIG. 21, since the electrode assembly 90 according to the exemplary embodiment has the same structure as that in the rechargeable battery 100 according to the first exemplary embodiment other than the thermo-compressed structure and the spiral-wound structure and therefore, the description of the same structure will be omitted.

The electrode assembly 90 is formed of a structure having the positive electrode 91 and the negative electrode 92 spiral-wound and having the separator 93 interposed therebetween. The electrode assembly 90 is provided with the positive electrode tab 96 and the negative electrode tab 97. The electrode assembly 90 has a cross-sectional portion in which stacked layers are exposed and an external peripheral surface wound therearound, and the external peripheral surface includes a flat front surface part and a curved surface connecting the front surface parts.

The electrode assembly 90 according to the exemplary embodiment is provided with the positive electrode tab 96 and the negative electrode tab 97 installed therein. Here, the positive electrode tab 96 and the negative electrode tab 97 are installed to be protruded from the curved surface. In this case, the positive electrode tab 96 and the negative electrode tab 97 are protruded in a direction which intersects at right angles with a winding shaft X2 of the electrode assembly 90.

The electrode assembly 10 is thermo-compressed by a first press plate 41 and a second press plate 42. The first pressing plate 41 and the second pressing plate 42 are heated in advance and compress the electrode assembly 10, such that the positive electrode 91 and the negative electrode 92 are closely adhered to the separators 93.

The first press plate 41 includes a first board 41a and a second board 41b spaced from the first board 41a. The first board 41a and the second board 41b are disposed outboard of the positive electrode tab 96 and the negative electrode tab 97, and therefore the first board 41a and the second board 41b have the positive electrode tab 96 and the negative electrode tab 97 disposed therebetween.

In addition, the second press plate 42 has the same shape as the first press plate 41 and includes a first board 42a and a second board 42b spaced apart from the first board 42a. The first board 42a is spaced apart from the second board 42b by a predetermined interval. The first board 42a and the second board 42b have the positive electrode tab 96 and the negative electrode tab 97 disposed therebetween.

The electrode assembly 10 is provided with a pressing region which is compressed by the pressing plates 41 and 42 and a non-pressing region in which is not compressed. The pressing region is formed at the outside edges based on the width direction of the electrode assembly 10, the non-pressing region is formed between the pressing regions, and the non-pressing region is extended in a direction perpendicular to the winding shaft X2.

Although exemplary embodiments have been disclosed, the present invention is not limited to the disclosed embodiments, but may be modified into many different forms within the scope of the invention as defined by the appended claims.

## Claims

1. An electrode assembly (10) for a secondary battery (100) including first and second electrode tabs (36, 37, 38, 39, 65, 66), wherein the electrode assembly comprises:
a body, comprising:
a central region (52, 54, 56, 58, 82, 84, 86) that extends lengthwise, from which at least one of the electrode tabs extends, and first and second side regions (51, 53, 55, 57, 81, 83, 85) on either side of the central region, each of the first and second side regions extending laterally from the central region to the edges of the electrode assembly,
**characterised in that** the central region is uncompressed and the first and second side regions are compressed, and the central region is thicker than the first and second side regions.

2. The electrode assembly of claim 1, wherein the first and second electrode tabs extend from within the body of the electrode assembly to a position outside the body of the electrode assembly, such that the portion of the first and second electrode tabs within the body of the electrode assembly lie in the central region.

3. The electrode assembly of claim 2, wherein the first and second electrode tabs are offset from one another across the width of the electrode assembly or wherein the first and second electrode tabs are aligned behind one another across the depth of the electrode assembly.

4. The electrode assembly of claim 2 or 3, wherein the central region extends from the top of the electrode assembly to the bottom of the electrode assembly.

5. The electrode assembly of claim 4, wherein the first and second electrode tabs extend from the central region at opposite ends of the body of the electrode assembly.

6. The electrode assembly of claim 2 or 3, wherein the central region extends from the top of the electrode assembly part way to the bottom of the electrode assembly.

7. The electrode assembly of claim 1, further comprising a first further region having the same thickness as the central region, wherein the first electrode tab extends from a position within the central region and the second electrode tab extends from a position within the first further region, wherein the central and first further regions are spaced apart from one another by a second further region of the same thickness as the first and second side regions.

8. The electrode assembly of claim 7, wherein the central and first further regions extend the whole length of the electrode assembly or wherein the central and first further regions extend partially from the top of the electrode assembly towards the bottom of the electrode assembly.

9. The electrode assembly of claim 1, wherein the first electrode tab and the second electrode tab extend from within the body of the electrode assembly to a position outside the body of the electrode assembly, wherein the portion of the first electrode tab within the body of the electrode assembly lies in the central region and the portion of the second electrode tab within the body of the electrode assembly lies in the first or second side regions.

10. The electrode assembly of claim 1, wherein the first and second electrode tabs extend from a side of the electrode assembly and the central region extends across the width of the electrode assembly.

11. The electrode assembly of any one of the preceding claims, wherein regions of the electrode assembly other than the central region are thermo-compressed, so as to provide a thickness that is less than the thickness of the central region.

12. A secondary battery comprising the electrode assembly according to any one of the preceding claims.

13. A method of manufacturing an electrode assembly as claimed in any one of claims 1 to 11, that comprises a central region (52, 54, 56, 58, 82, 84, 86) from which an electrode tab (36, 37, 38, 39, 65, 66) extends, the method comprising:
compressing the first and second side regions (51, 53, 55, 57, 81, 83, 85) outside the central region, such that the central region is thicker than the first and second side regions.

14. The method of claim 13, wherein the step of compressing the first and second side regions comprises compressing using heated plates (41, 42, 43, 44, 45, 46, 47, 48, 71, 72, 73, 74, 75, 76).

15. The method of claim 14, wherein the heated plates are arranged in a predetermined pattern so as to thermo-compress regions other than the central region.

## Patentansprüche

1. Elektrodenanordnung (10) für eine Sekundärbatterie (100), aufweisend eine erste und eine zweite Elektrodenzunge (36, 37, 38, 39, 65, 66), wobei die Elektrodenanordnung Folgendes umfasst:
einen Körper, umfassend:
einen zentralen Bereich (52, 54, 56, 58, 82, 84, 86), der sich der Länge nach erstreckt, von dem aus mindestens eine der Elektrodenzungen sich erstreckt, und einen ersten und einen zweiten Seitenbereich (51, 53, 55, 57, 81, 83, 85) auf beiden Seiten des zentralen Bereiches, wobei jeder des ersten und des zweiten Seitenbereichs sich seitlich von dem zentralen Bereich bis zu den Kanten der Elektrodenanordnung erstreckt,
**dadurch gekennzeichnet, dass**
der zentrale Bereich nicht komprimiert ist und die ersten und zweiten Seitenbereiche komprimiert sind und der zentrale Bereich dicker als der erste und der zweite Seitenbereich ist.

2. Elektrodenanordnung nach Anspruch 1, wobei der erste und der zweite Elektrodenzunge sich derart aus dem Körper der Elektrodenanordnung heraus bis zu einer Stelle außerhalb des Körpers der Elektrodenanordnung erstrecken, dass der Abschnitt der ersten und der zweiten Elektrodenzunge innerhalb des Körpers der Elektrodenanordnung in dem zentralen Bereich liegt.

3. Elektrodenanordnung nach Anspruch 2, wobei die erste und die zweite Elektrodenzunge über die Breite der Elektrodenanordnung gegeneinander versetzt sind oder wobei die erste und die zweite Elektrodenzunge über die Tiefe der Elektrodenanordnung hintereinander ausgerichtet sind.

4. Elektrodenanordnung nach Anspruch 2 oder 3, wobei der zentrale Bereich sich von dem oberen Rand der Elektrodenanordnung bis zu dem unteren Rand der Elektrodenanordnung erstreckt.

5. Elektrodenanordnung nach Anspruch 4, wobei die erste und die zweite Elektrodenzunge sich von dem zentralen Bereich aus an gegenüberliegenden Enden des Körpers der Elektrodenanordnung erstrecken.

6. Elektrodenanordnung nach Anspruch 2 oder 3, wobei der zentrale Bereich sich von dem oberen Rand der Elektrodenanordnung teilweise bis zu dem unteren Rand der Elektrodenanordnung erstreckt.

7. Elektrodenanordnung nach Anspruch 1, ferner umfassend einen ersten weiteren Bereich mit der gleichen Dicke wie der zentrale Bereich, wobei die erste Elektrodenzunge sich von einer Stelle innerhalb des zentralen Bereiches aus erstreckt und die zweite Elektrodenzunge sich von einer Stelle innerhalb des ersten weiteren Bereiches aus erstreckt, wobei der zentrale und der erste weitere Bereich durch einen zweiten weiteren Bereich der gleichen Dicke wie der erste und der zweite Seitenbereich voneinander beabstandet sind.

8. Elektrodenanordnung nach Anspruch 7, wobei der zentrale und der erste weitere Bereich sich über die gesamte Länge der Elektrodenanordnung erstrecken oder wobei der zentrale und der erste weitere Bereich sich teilweise von dem oberen Rand der Elektrodenanordnung in Richtung des unteren Randes der Elektrodenanordnung erstrecken.

9. Elektrodenanordnung nach Anspruch 1, wobei die erste Elektrodenzunge und die zweite Elektrodenzunge sich aus dem Körper der Elektrodenanordnung heraus bis zu einer Stelle außerhalb des Körpers der Elektrodenanordnung erstrecken, wobei der Abschnitt der ersten Elektrodenzunge innerhalb des Körpers der Elektrodenanordnung in dem zentralen Bereich liegt und der Abschnitt der zweiten Elektrodenzunge innerhalb des Körpers der Elektrodenanordnung in dem ersten oder dem zweiten Seitenbereich liegt.

10. Elektrodenanordnung nach Anspruch 1, wobei die erste und die zweite Elektrodenzunge sich von einer Seite der Elektrodenanordnung aus erstrecken und der zentrale Bereich sich über die Breite der Elektrodenanordnung erstreckt.

11. Elektrodenanordnung nach einem der vorangehenden Ansprüche, wobei Bereiche der Elektrodenanordnung, die nicht der zentrale Bereich sind, thermokomprimiert sind, um eine Dicke bereitzustellen, die geringer als die Dicke des zentralen Bereiches ist.

12. Sekundärbatterie, umfassend die Elektrodenanordnung nach einem der vorangehenden Ansprüche.

13. Verfahren zur Herstellung einer Elektrodenanordnung nach einem der Ansprüche 1 bis 11, die einen zentralen Bereich (52, 54, 56, 58, 82, 84, 86) umfasst, von dem aus eine Elektrodenzunge (36, 37, 38, 39, 65, 66) sich erstreckt, wobei das Verfahren Folgendes umfasst:
Komprimieren des ersten und des zweiten Seitenbereichs (51, 53, 55, 57, 81, 83, 85) außerhalb des zentralen Bereiches derart, dass der zentrale Bereich dicker als der erste und der zweite Seitenbereich ist.

14. Verfahren nach Anspruch 13, wobei der Schritt des Komprimierens des ersten und des zweiten Seitenbereichs das Komprimieren unter Verwendung von Heizplatten (41, 42, 43, 44, 45, 46, 47, 48, 71, 72, 73, 74, 75, 76) umfasst.

15. Verfahren nach Anspruch 14, wobei die Heizplatten in einem vorgegebenen Muster angeordnet sind, um Bereiche, die nicht der zentrale Bereich sind, zu thermokomprimieren.

## Revendications

1. Ensemble formant électrode (10) pour une batterie secondaire (100) comprenant des première et seconde languettes d'électrode (36, 37, 38, 39, 65, 66), où l'ensemble formant électrode comprend :
un corps comprenant :
une région centrale (52, 54, 56, 58, 82, 84, 86) qui s'étend dans le sens de la longueur, à partir de laquelle au moins l'une des languettes d'électrode s'étend, et des première et seconde régions latérales (51, 53, 55, 57, 81, 83, 85) de chaque côté de la région centrale, chacune des première et seconde régions latérales s'étendant latéralement à partir de la région centrale jusqu'aux bords de l'ensemble formant électrode,
**caractérisé en ce que** :
la région centrale n'est pas comprimée, et les première et seconde régions latérales sont comprimées, et la région centrale est plus épaisse que les première et seconde régions latérales.

2. Ensemble formant électrode selon la revendication 1, dans lequel les première et seconde languettes d'électrode s'étendent depuis l'intérieur du corps de l'ensemble formant électrode jusqu'à une position à l'extérieur du corps de l'ensemble formant électrode, de sorte que la partie des première et seconde languettes d'électrode à l'intérieur du corps de l'ensemble formant électrode se trouve dans la région centrale.

3. Ensemble formant électrode selon la revendication 2, dans lequel les première et seconde languettes d'électrode sont décalées l'une de l'autre de part et d'autre de la largeur de l'ensemble formant électrode, ou dans lequel les première et seconde languettes d'électrode sont alignées l'une derrière l'autre de part et d'autre de la profondeur de l'ensemble formant électrode.

4. Ensemble formant électrode selon la revendication 2 ou 3, dans lequel dans lequel la région centrale s'étend à partir du dessus de l'ensemble formant électrode jusqu'au fond de l'ensemble formant électrode.

5. Ensemble formant électrode selon la revendication 4, dans lequel les première et seconde languettes d'électrode s'étendent à partir de la région centrale au niveau des extrémités opposées du corps de l'ensemble d'électrode.

6. Ensemble formant électrode selon la revendication 2 ou 3, dans lequel la région centrale s'étend à partir du dussus de la partie d'ensemble formant électrode jusqu'au fond de l'ensemble formant électrode.

7. Ensemble formant électrode selon la revendication 1, comprenant en outre une première région supplémentaire ayant la même épaisseur que la région centrale, dans lequel la première languette d'électrode s'étend à partir d'une position dans la région centrale, et la seconde languette d'électrode s'étend à partir d'une position dans la première région supplémentaire, dans lequel la région centrale et la première région supplémentaire sont espacées l'une de l'autre par une seconde région supplémentaire de la même épaisseur que celle des première et seconde régions latérales.

8. Ensemble formant électrode selon la revendication 7, dans lequel la région centrale et la première région supplémentaire s'étendent sur toute la longueur de l'ensemble formant électrode, ou dans lequel la région centrale et la première région supplémentaire s'étendent partiellement du dessus de l'ensemble formant électrode vers le fond de l'ensemble formant électrode.

9. Ensemble formant électrode selon la revendication 1, dans lequel la première languette d'électrode et la seconde languette d'électrode s'étendent depuis l'intérieur du corps de l'ensemble formant électrode jusqu'à une position à l'extérieur du corps de l'ensemble formant électrode, dans lequel la partie de la première languette d'électrode à l'intérieur du corps de l'ensemble formant électrode se trouve dans la région centrale et la partie de la seconde languette d'électrode à l'intérieur du corps de l'ensemble formant électrode se trouve dans la première ou seconde région latérale.

10. Ensemble formant électrode selon la revendication 1, dans lequel les première et seconde languettes d'électrode s'étendent depuis un côté de l'ensemble formant électrode et la région centrale s'étend de part et d'autre de la largeur de l'ensemble formant électrode.

11. Ensemble formant électrode selon l'une quelconque des revendications précédentes, dans lequel les régions de l'ensemble formant électrode autres que la région centrale sont comprimées thermiquement afin de fournir une épaisseur qui est inférieure à l'épaisseur de la région centrale.

12. Batterie secondaire comprenant l'ensemble formant électrode selon l'une quelconque des revendications précédentes.

13. Procédé pour fabriquer un ensemble formant électrode selon l'une quelconque des revendications 1 à 11, qui comprend une région centrale (52, 54, 56, 58, 82, 84, 86) à partir de laquelle une languette d'électrode (36, 37, 38, 39, 65, 66) s'étend, le procédé comprenant l'étape consistant à :
comprimer les première et seconde régions latérales (51, 53, 55, 57, 81, 83, 85) à l'extérieur de la région centrale, de sorte que la région centrale est plus épaisse que les première et seconde régions latérales.

14. Procédé selon la revendication 13, dans lequel l'étape de compression des première et seconde régions latérales consiste en la compression au moyen de plaques chauffées (41, 42, 43, 44, 45, 46, 47, 48, 71, 72, 73, 74, 75, 76) .

15. Procédé selon la revendication 14, dans lequel les plaques chauffées sont agencées selon un motif prédéterminé afin de comprimer thermiquement les régions autres que la région centrale.
